# EUROPEAN PATENT APPLICATION

(11) **EP 3 754 373 A1**
(43) Date of publication of application: **23.12.2020**
(21) Application number: 19181069.6
(22) Date of filing: 18.06.2019
(51) Int. Cl.: G01S 13/931, G01S 17/931, G01S 7/41, G01S 7/48, G01S 7/40, G01S 7/497, G06K 7/10, G01S 13/75, G01S 17/74, G01S 7/02, G01S 13/86, G01S 17/02, G06N 3/02

(54) **METHOD AND SYSTEM FOR DETERMINING INFORMATION REGARDING AN OBJECT**

(71) Applicant: Visteon Global Technologies, Inc., Van Buren Township, MI 48111-5711 (US)
(72) Inventor: ZELLER, Niclas, 85764 Oberschleißheim (DE); MAHLER, Tobias, 76227 Karlsruhe (DE); MAINBERGER, Markus, 71640 Ludwigsburg (DE); PFEIFLE, Martin, 72297 Seewald (DE)
(74) Representative: MERH-IP Matias Erny Reichl Hoffmann Patentanwälte PartG mbB

(57) **Abstract**

A system for a vehicle (10) is described, wherein the system comprises an environment sensor (12) which is configured to capture sensor data (20) regarding an environment of the vehicle (10), and a control unit (11) coupled to the environment sensor (12). The control unit (11) is configured to detect, based on the sensor data (20), a retroreflective component (42) which is attached to an object (44). Furthermore, the control unit (11) is configured to determine, based on the sensor data (20), a reflectometer type of the detected retroreflective component (42) from a plurality of pre-determined retroreflector types. In addition, the control unit (11) is configured to determine information regarding the object (44) to which the detected retroreflective component (42) is attached, based on the reference data set which is associated with the determined reflectometer type of the detected retroreflective component (42).

## Description

### TECHNICAL FIELD

The present document relates to a method and/or a system for improving the detection and/or the classification of objects and/or for providing precise information regarding an object.

### BACKGROUND

A vehicle, notably a road vehicle, such as a car, a bus, a truck or a motorcycle, may comprise one or more environment sensors which are configured to capture sensor data with regards to the environment of the vehicle. Example environment sensors are a camera, a radar sensor and/or a lidar sensor. The sensor data may be analyzed in order to detect objects such as other vehicles or road users within the environment of the vehicle. Furthermore, the type of object and/or other characteristics of an object (such as the size of an object and/or the distance of an object) may be determined based on the sensor data.

### BRIEF SUMMARY OF THE INVENTION

According to an aspect, a system for a vehicle, notably for an (at least partially) autonomous vehicle, is described. The system comprises an environment sensor which is configured to capture sensor data regarding an environment of the vehicle, and a control unit coupled to the environment sensor. The control unit is configured to detect, based on the sensor data, a retroreflective component which is attached to an object (e.g. to the rear side of an object). Furthermore, the control unit is configured to determine or select, based on the sensor data, a reflectometer type of the detected retroreflective component from a plurality of pre-determined retroreflector types. In addition, the control unit is configured to determine information regarding the object to which the detected retroreflective component is attached, notably based on a reference data set which is associated with the determined reflectometer type of the detected retroreflective component.

According to another aspect, a vehicle, notably a (one-track or two track) road vehicle, is described, such as a car, a bus, a truck or a motorcycle. The vehicle includes a system according to one or more embodiments of the present document.

According to further aspect, a (Computer-implemented) method for determining information regarding an object within an environment of a vehicle is described. The computer implemented method may be carried out by a non-transitory, computer-readable medium. The non-transitory, computer-readable medium may include instructions that when executed by a processor, cause the processor to perform the method. The method comprises capturing sensor data regarding the environment of the vehicle, and detecting, based on the sensor data, a retroreflective component which is attached to an object within the environment of the vehicle. The method further comprises determining, based on the sensor data, a reflectometer type of the detected retroreflective component from a plurality of pre-determined retroreflector types. In addition, the method comprises determining information regarding the object to which the detected retroreflective component is attached, notably based on a reference data set which is associated with the determined reflectometer type of the detected retroreflective component.

One or more embodiments of the present document use sensor data from one or more environment sensors of a vehicle, such as an autonomous vehicle, to detect objects and determine information regarding the objects. One or more embodiments of the present document increase the quality, the precision, and/or reliability of the detection of the objects and/or information regarding the objects.

### BRIEF DESCRIPTION OF THE DRAWINGS

Fig. 1 shows example components of a vehicle.
Fig. 2 illustrates the sensor data of an environment sensor of a vehicle;
Fig. 3 illustrates an example machine-learned object detection unit using a neural network;
Figs. 4a and 4b illustrate objects using differently shaped retroreflective components;
Figs. 5a and 5b illustrates an object using a retroreflective component comprising several retroreflective elements; and
Fig. 6 shows a flow chart of an example method for determining information regarding an object based on sensor data.

### DETAILED DESCRIPTION OF THE INVENTION

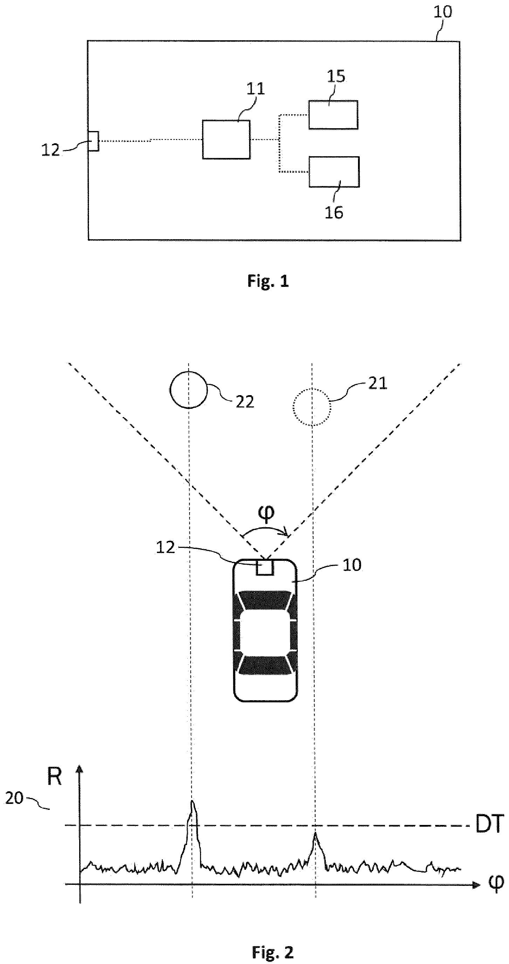

As outlined above, one or more embodiments of the present document increase the quality, the precision and/or the reliability, with which information regardingan object can be determined based on sensor data. In this context, Fig. 1 shows example components of a vehicle 10. The vehicle comprises one or more environment sensors 12, which are configured to capture sensor data indicative of the environment of the vehicle 10. The environment may include the surroundings around the vehicle 10. In particular, the vehicle 10 may comprise as environment sensors 12 a camera configured to provide video or camera data, a radar sensor configured to provide radar data and/or a lidar sensor configured to provide lidar data.

A control unit 11 of the vehicle 10 may be configured to operate one or more actuators 15 of the vehicle 10 in dependence of the sensor data of the one or more environment sensors 12. Based on the sensor data, the control unit 11 may send a control signal to the one or more actuators 15. The control signal may cause the one or more actuators 15 to operate, such as to perform an action. The control signal may include command instructions to cause the one or more actuators 15 to operate, such as to perform the action. Example actuators 15 are a propulsion motor or engine, a braking system and/or a steering system of the vehicle 10. The actuators 15 may be configured to provide forward and/or sideways control of the vehicle 10. Hence, the control unit 11 may be configured to control the one or more actuators 15, in order to perform the forward and/or sideways control of the vehicle 10 at least partially in an autonomous manner (e.g. to provide an (advanced) driver assistance system).

In particular, the control unit 11 may be configured to analyze the sensor data of the one or more environment sensors 12, in order to detect one or more objects within the environment of the vehicle 10. The object detection may be performed using an object detection unit 16. Furthermore, the one or more objects may be classified according to one of a plurality of different object classes or object types. Example object classes or types are: a moving object, e.g. a preceding or trailing vehicle traveling on a road within the environment of the vehicle 10, a cyclist traveling on a road, in a lane, within the environment of the vehicle 10, a pedestrian walking in a crosswalk within the environment of the vehicle 10, etc., or a static object, e.g. a building, a traffic sign, etc. The moving object classification may include objects designed to freely move, even if currently at rest, such as a vehicle parked in a parking spot, a cyclist stopped at a stop sign, a pedestrian standing on a street corner, etc. The one or more actuators 15 may be controlled in dependence of the position and/or of the type or class of the detected one or more objects, e.g. in order to maintain a space cushion with the detected one or more objects.

The detection rate for detecting an object may vary, depending on the conditions within the environment of the vehicle 10 (e.g. the light conditions, precipitation within the environment, the density of objects within the environment, etc.), depending on the type of environment sensor 12 and/or depending on the type of object. By way of example, the radar cross section (RCS) of a pedestrian or a bicyclist is typically relatively small such that these types of objects may exhibit a relatively low detection rate and/or a relatively low maximum detection range using a radar sensor. Furthermore, the detection rate of objects using camera data may be relatively low in case of fog or heavy rain.

The detection rate of an object may be increased when using a retroreflective component, as illustrated in Fig. 2. Fig. 2 shows the sensor data 20 of an environment sensor 12 of the vehicle 10 for a first object 21 which does not comprise a retroreflective component and for a second object 22 which comprises a retroreflective component. It can be seen that the sensor data 20, notably the amount of reflected energy R, is above the detection threshold DT for the second object 22, whereas the energy R is below the detection threshold DT for the first object 21.

A retroreflective component is configured to reflect electromagnetic rays or waves. In particular, the rays or waves, which are emitted by a radar sensor 12 or a lidar sensor 12, may be reflected back directly to the radar sensor 12 or the lidar sensor 12, thereby increasing the amount of energy R which is captured by the radar sensor or the lidar sensor. In case of a camera, the ambient light or the sunlight or the light from the headlights of the vehicle 10 may be directed or reflected towards the camera 12 of the vehicle 10, thereby increasing the amount of energy R captured by the camera 12.

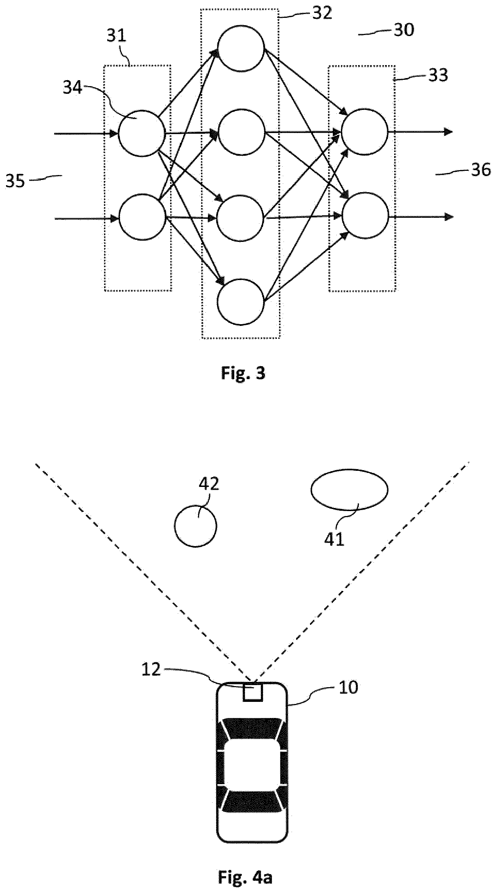

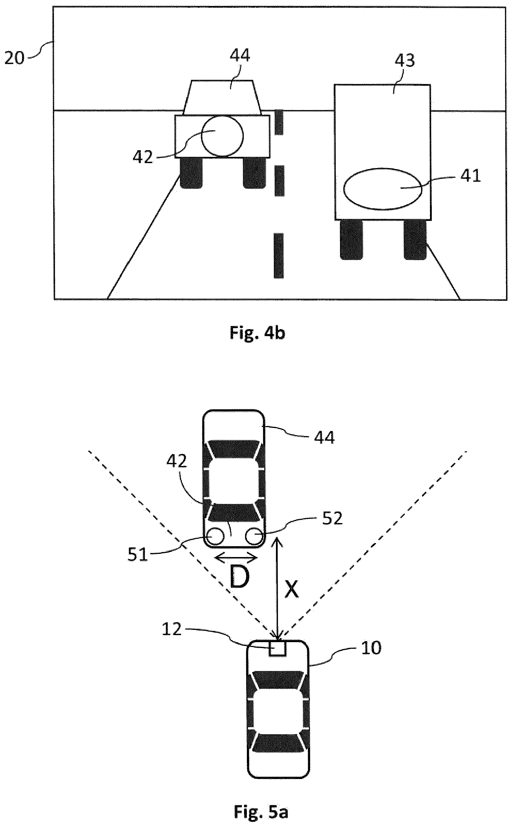

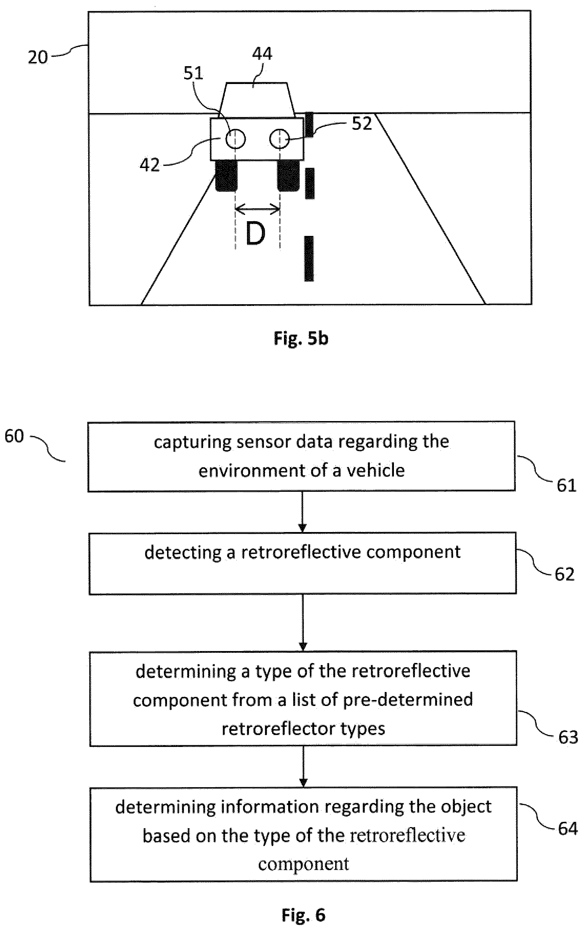

Different types of objects may be provided with different types of retroreflective components, as illustrated in Figures 4a, 4b, 5a and 5b. In other words, objects may make use of object type-specific retroreflective components. Figs. 4a and 4b illustrate a situation where a first object 43 (e.g. a truck) exhibits a first retroreflective component 41 having a first shape (e.g. an oval shape, as shown in Figs. 4a and 4b), and where a second object 44 (e.g. a car) exhibits a second retroreflective component 42 having a second shape (e.g. a round shape, as shown in Figs. 4a and 4b). Hence, different types of objects 43, 44 may make use of differently shaped and/or designed retroreflective components 41,42.

Fig. 4b shows the camera data 20 which is captured by a camera 12 of the vehicle 10. The control unit 11, notably the object detection unit 16, of the vehicle 10 may analyze the camera data 20 to detect the retroreflective components 41, 42. Due to the relatively increased energy R of the retroreflective components 41, 42 within the camera data 20, the retroreflective components 41, 42 can be detected with an increased reliability. Furthermore, the shape of the different retroreflective components 41, 42 may be determined, in order to determine the different types of the retroreflective components 41, 42 which are attached to the different objects 43, 44. Different types of retroreflective components 41, 42 may be assigned to different types of objects 43, 44, thereby enabling the control unit 11 to determine the type of an object 43, 44 in a reliable manner, based on the type of the retroreflective component 41, 42 which is attached to the object 43, 44.

Figs. 5a and 5b show an example of a retroreflective component 42 comprising multiple retroreflective elements 51, 52. The retroreflective elements 51, 52 may be arranged in a defined manner with respect to one another. In the illustrated example, the (two) retroreflective elements 51, 52 exhibit a defined distance D with respect to one another. The one or more retroreflective elements 51, 52 of a retroreflective component 42 may comprise or may be one or more corner reflectors.

The control unit 11 may be configured to analyze the camera data 20 to detect the retroreflective elements 51, 52. Furthermore, the control unit 11 may be configured to determine that the retroreflective elements 51, 52 form a joint retroreflective component 42 of a particular retroreflector type. A retroreflector type may be associated with reference data regarding characteristics or properties of retroreflective components 42 that belong to the retroreflector type. Example reference data of a retroreflector type may be indicative of: the number of retroreflective elements 51, 52; the shape and/or the size of the retroreflective elements 51, 52; the distance D between the retroreflective elements 51, 52; the reflectivity of the retroreflective elements 51, 52; the polarization and/or a polarization change of wages during reflection; the spatial arrangement of the retroreflective elements 51, 52, etc.

The control unit 11 may be configured to determine the type of a retroreflective component 42 based on the reference data for a list of predetermined retroreflector types. In particular, the control unit 11 may analyze the sensor data 20, in order to measure one or more properties of the retroreflective component 42 which is shown within the sensor data. The one or more measured properties may be compared with the reference data for the list of predetermined retroreflector types, in order to determine the retroreflector type of the retroreflective component 42 which is shown within the sensor data.

Knowing the type of the retroreflective component 42, the type of the object 44 may be determined, which is associated with the type of the retroreflective component 42. Furthermore, additional information regarding the detected object 44 may be determined. By way of example, the control unit 11 may measure the distance D between two retroreflective elements 51, 52 within the sensor data 20. The measured distance D may be compared with the actual distance indicated within the reference data for the determined type of the retroreflective component 42, in order to determine the distance X of the detected object 44 from the vehicle 10. Hence, photogrammetry applications may be performed based on the standardized retroreflective components 41, 42

As indicated above, the control unit 11 may make use of an object detection unit 16 which is configured to analyze the sensor data 20 of one or more environment sensors 12 to detect an object 44 and/or to determine information regarding an object 44 (such as the type of object 44 and/or the distance X of the object 44). The object detection unit 16 may be a machine-learned detection unit. In particular, the object detection unit 16 may comprise a neural network, notably a convolutional neural network (CNN), which has been trained to detect an object 44 and/or to determine information regarding an object 44 based on the sensor data 20 of one or more environment sensors 12.

Fig. 3 illustrates an example neural network 30 comprising an input layer 31, one or more hidden layers 32 and an output layer 33. Each of the layers 31, 32, 33 comprises one or more artificial neurons 34. A neuron 34 typically comprises one or more neuron parameters, such as a weight and/or an offset, as well as an activation function. The neuron parameters of a neural network 30 may be trained using a training algorithm, such as the backpropagation algorithm.

The neural network 30 may receive as input an input vector 35 which is indicative of the sensor data of the one or more environment sensors 12 of the vehicle 10. On the other hand, the neural network 30 may provide as an output an output vector 36 which is indicative of an object 44 and/or information regarding an object 44.

The neural network 30 may be trained using the plurality of training data sets. The neural network 30 may be trained by setting the neuron parameters of the neural network 30 such that in average for each of the plurality of training data sets, a deviation of estimated object information (provided as output by the neural network 33) and ground truth object information (indicated by the training data set) is reduced, notably minimized. As indicated above, an iterative training algorithm, such as the backpropagation algorithm, may be used to achieve this goal. The training data may comprise the sensor data 20 as input, and as output the location of a retroreflective component 41, 42 within the sensor data 20.

A retroreflective structure or component 41, 42 (comprising e.g. one or more corner reflectors) may be attached to the helmets for cyclists and/or on jackets for pedestrians. Alternatively, or in addition, special clothing comprising one or more retroreflective structures or components 41, 42 may be provided (e.g. for construction workers). Furthermore, the retroreflective components 41, 42 may be attached to the rear of vehicles. A retroreflective component 41, 42 may be used to increase the RCS of the object 43, 44 that the retroreflective component 41, 42 is attached to, thereby significantly improving the detection probability or the detection range (e.g. an increase of +12dB of the RCS may increase the radar detection range by a factor two).

As outlined above, a unique pattern of one or more retroreflective elements 51, 52 may be used to classify road users (e.g. two horizontally aligned retroreflective elements 51, 52 may be used for cars and two vertically aligned retroreflective elements 51, 52 may be used for cyclists or pedestrians).

One or more retroreflective elements 51, 52 may be attached to one or more edges of an object 41, 42. By doing this, the shape and/or the size of an object 41, 42 may be determined in a precise manner.

The one or more retroreflective elements 51, 52 of a retroreflective component 41, 42 may form a retroreflective machine-readable code, such as a QR (Quick Response) code or a barcode. The control unit 11 may be configured to extract information from the retroreflective machine-readable code. By way of example, the retroreflective component 41, 42 may be attached to a traffic sign and the information given by the retroreflective machine-readable code may indicate the speed limit which is indicated by the traffic sign.

Retroreflective components 41, 42 may be attached to different static objects 43, 44, thereby providing retroreflective landmarks. The control unit 11 may be configured to determine a location of the vehicle 10 based on one or more detected retroreflective landmarks (e.g. in conjunction with digital map data).

Retroreflective components 41, 42 may be used for calibration purposes. The control unit 11 may be configured to determine the exact position of one or more retroreflective landmarks, e.g. using environment sensors 12 such as Lidar and/or Radar. This position information in combination with the defined relative locations of the retroreflective landmarks may be used to (re-) calibrate intrinsic parameters of the camera 12 of the vehicle 10.

Fig. 6 shows a flow chart of an example method 60 for determining information regarding an object 44 within an environment of a vehicle 10. The method 60 may be performed by a control unit 11 of the vehicle 10.

The method 60 comprises capturing 61 sensor data 20 regarding the environment of the vehicle 10. The sensor data 20 may comprise camera data captured by a camera 12 of the vehicle 10, radar data captured by a radar sensor 12 of the vehicle 10 and/or lidar data captured by a lidar sensor 12 of the vehicle 10. The sensor data 20 may be captured at a sequence of time instants (e.g. every 20ms). The method 60 may be repeated for the sequence of time instants.

Furthermore, the method 60 comprises detecting 62, based on the sensor data 20, a retroreflective component 42 which is attached to an object 44 within the environment of the vehicle 10. The retroreflective component 42 may be detected using a machine-learned object detection unit 16 and/or using image processing tools. The detected retroreflective component 42 is referred to herein as the "first retroreflective component 42".

The retroreflective component 42 may comprise one or more retroreflective elements 51, 52. The environment sensor 12 of the vehicle 10, which is used to capture the sensor data 20, may be configured to sense data regarding electromagnetic and/or acoustic waves within the environment of the vehicle 10. The retroreflective component 42 (notably the one or more retroreflective elements 51, 52) may be configured to reflect electromagnetic and/or acoustic waves. In particular, the retroreflective component 42 may be configured to reflect electromagnetic and/or acoustic wave with a reflectance greater than 50%, or greater than 70% or greater than 90%. Alternatively, or in addition, the retroreflective component 42 may be configured to reflect electromagnetic and/or acoustic wave (back) into the direction of the environment sensor 12.

Furthermore, the method 60 comprises determining 63, based on the sensor data 20, a reflectometer type of the detected (i.e. the first) retroreflective component 42 from a plurality of pre-determined retroreflector types. For this purpose, one or more features and/or properties of the detected (i.e. the first) retroreflective component 42 may be measured within the sensor data 20. The reflectometer type may then be determined in a precise manner using the one or more measured features and/or properties.

The plurality of pre-determined retroreflector types may be associated with a corresponding plurality of reference data sets comprising information regarding objects 43, 44. In particular, different types of objects 43, 44 may make use of different retroreflector types (e.g. using a one-to-one correspondence). As a result of this, the type of an object 43, 44 may be determined in a precise manner by determining the retroreflector type of the retroreflective component 41, 42, which is attached to the object 43, 44.

The method 60 further comprises determining 64 information regarding the object 44 (e.g. determining the type of the object 44), to which the detected (i.e. the first) retroreflective component 42 is attached. The information may be determined based on the reference data set which is associated with the determined reflectometer type of the detected (i.e. the first) retroreflective component 42.

By making use of different reflectometer types for different types of objects 43, 44, the type of an object 43, 44 may be determined in a reliable and precise manner. Furthermore, the rate of detection of an object 43, 44 may be increased by attaching a retroreflective component 41, 42 to the object 43, 44.

As indicated above, different reference data sets from the plurality of reference data sets may be indicative of different types of objects 43, 44. The different types of objects 43, 44 may comprise: one or more different types of road users, a car, a truck, a bus, a pedestrian, a bicyclist, a motorcyclist, a building, and/or one or more different types of road infrastructure, a road barrier, a marker post and/or a traffic sign.

The control unit 11 may be configured to determine the type of the object 44 to which the detected (i.e. the first) retroreflective component 42 is attached, based on the reference data set which is associated with the determined reflectometer type of the detected retroreflective component 42. In particular, the type of object which is associated with the determined reflectometer type of the detected retroreflective component 42 may be identified as being the type of the detected object 44.

Retroreflective components 41, 42 having different retroreflector types may differ at least with regards to one or more properties. In other words, the different pre-determined retroreflector types may be indicative of retroreflective components 41, 42 which differ at least with regards to one or more properties. The one or more properties of a retroreflective component 41, 42 may be used to determine the retroreflector type may of the retroreflective component 41, 42 in a precise manner.

Example properties of a retroreflective component 41, 42 are: the number of retroreflective elements 51, 52 comprised within the retroreflective component 41, 42; the spatial arrangement of two or more retroreflective elements 51, 52 comprised within the retroreflective component 41, 42; the distance D between at least two retroreflective elements 51, 52 comprised within the retroreflective component 41, 42; the location within or on the surface of an object 43, 44, at which the retroreflective component 41, 42 is attached to the object 43, 44; the size of a retroreflective element 51, 52 of the retroreflective component 41, 42; the shape of a retroreflective element 51, 52 of the retroreflective component 41, 42; and/or a reflection property (such as the polarization incurred by a wave during reflection) of a retroreflective element 51, 52 of the retroreflective component 41, 42.

The control unit 11 may be configured to determine, based on the sensor data 20, measured values of one or more properties of the detected (i.e. the first) retroreflective component 42. The measured values of the one or more properties may be measured in units provided by the resolution of the sensor data 20. By way of example, the distance and/or the size of retroreflective elements 51, 52 may be measured in number of pixels (in case of image data). The control unit 11 may be configured to determine the reflectometer type of the detected (i.e. the first) retroreflective component 42 in a reliable manner based on the one or more measured values.

The plurality of reference data sets for the plurality of pre-determined retroreflector types may comprise a corresponding plurality of lists of reference values for one or more properties of the retroreflective components 41, 42 of the respective retroreflector types. In other words, the reference data set of a pre-determined retroreflector type may indicate reference values for one or more properties of the retroreflective components 41, 42 of this retroreflector type. The reference values may indicate the actual (real life) values of the one or more properties, e.g. the actual size of a retroreflective element 51, 52 and/or the actual distance between retroreflective elements 51, 52.

The control unit 11 may be configured to compare the one or more measured values with the plurality of lists of reference values for the corresponding plurality of pre-determined retroreflector types, in order to determine the reflectometer type of the detected (i.e. the first) retroreflective component 42. In particular, the control unit 11 may be configured to identify the list of reference values (from the plurality of lists of reference values), which corresponds to the one or more measured values. The pre-determined retroreflector type, which is associated with the identified list of reference values, may be determined to be the reflectometer type of the detected (i.e. the first) retroreflective component 42. By taking into account measured values and/or reference values of one or more properties of retroreflective components 41, 42, the reflectometer type of the detected retroreflective component 42 may be determined in a precise and reliable manner.

The list of reference values of the reflectometer type of the detected (i.e. the first) retroreflective component 42 may be indicative of at least one reference value for a size related property of the detected retroreflective component 42. The size related property may comprise the size of a retroreflective element 51, 52 of the detected retroreflective component 42 and/or the distance D between at least two retroreflective elements 51, 52 comprised within the detected retroreflective component 42.

The control unit 11 may be configured to determine, based on the sensor data 20, a measured value for the size related property of the detected (i.e. the first) retroreflective component 42. Furthermore, the control unit 11 may be configured to determine the information regarding the object 44 to which the detected retroreflective component 42 is attached, based on the reference value and based on the measured value for the size related property (notably based on the ratio of the reference value and the measured value for the size related property).

In particular, the control unit 11 may be configured to determine distance information regarding the distance X of the detected object 44 from the environment sensor 12, based on the reference value and based on the measured value for the size related property. Alternatively, or in addition, the control unit 11 may be configured to determine size information regarding the size of the detected object 44 based on the reference value and based on the measured value for the size related property.

The control unit 11 may be configured to determine the information regarding the object 44 to which the detected (i.e. the first) retroreflective component 42 is attached, based on one or more sensor parameters of the environment sensor 12 (such as the intrinsic and/or extrinsic parameters of a camera). By way of example, knowing the focal length f of a camera, and knowing the reference distance D of retroreflective elements 51, 52 of the detected (i.e. the first) retroreflective component 42, and knowing the measured distance d of the retroreflective elements 51, 52 of the detected (i.e. the first) retroreflective component 42, the distance X between the object 44 and the environment sensor 12 may be determined as X=D^{∗}f/d. By taking into account one or more sensor parameters, size related information may be determined in a precise manner.

As indicated above, the control unit 11 may be configured to detect the retroreflective component 42, determine the reflectometer type of the detected retroreflective component 42 and/or determine the information regarding the object 44 to which the detected retroreflective component 42 is attached, using one or more machine-learned object detection units 16. By making use of a machine-learned object detection unit 16, object information may be determined in a reliable and efficient manner.

The one or more machine-learned object detection units may each comprise a neural network, notably a convolutional neural network. Alternatively, or in addition, the one or more machine-learned object detection units may have been trained using training data comprising a plurality of training data sets. Alternatively, or in addition, the one or more machine-learned object detection units may have been trained for the plurality of different pre-determined retroreflector types. As a result of this, object information may be determined in a reliable and efficient manner.

The detected (i.e. the first) retroreflective component 42 may comprise a plurality of retroreflective elements 51, 52 which form a machine-readable code that is indicative of encoded information. The coding scheme may be known to the control unit 11. In particular, the coding scheme may be stored as decoding data within a storage unit of the vehicle 10. The control unit 11 may be configured to extract the encoded information from the machine-readable code (e.g. using the decoding data which is indicative of the coding scheme). In view of the fact, that the retroreflective elements 51, 52 can be detected in a reliable manner, coded information may be provided to the vehicle 10 in a reliable manner.

The vehicle 10 may comprise a first and a second environment sensor 12 (e.g. a radar or lidar sensor and a camera). The control unit 11 may be configured to determine the information regarding the object 44 (e.g. the position and/or the distance of the object 44) based on the sensor data 20 captured by the first environment sensor 12 (e.g. by the radar or lidar sensor). Furthermore, the control unit 11 may be configured to calibrate the second environment sensor 12 (e.g. the camera) using the determined information regarding the object 44 (e.g. the position and/or the distance of the object 44). In particular, one or more intrinsic parameters of the camera of the vehicle 10 may be determined. By doing this, the sensing quality of the vehicle 10 may be increased.

Furthermore, a system for a vehicle 10 is described. The system comprises an environment sensor 12 which is configured to capture sensor data 20 regarding an environment of the vehicle 10. Furthermore, the system comprises a control unit 11 which is configured to perform the method 60 described in the present document.

The features described in herein can be relevant to one or more embodiments in any combination. The reference numerals in the claims have merely been introduced to facilitate reading of the claims. They are by no means meant to be limiting.

Throughout this specification various embodiments have been discussed. However, it should be understood that the invention is not limited to any one of these. It is therefore intended that the foregoing detailed description be regarded as illustrative rather than limiting.

## Claims

1. A system for a vehicle (10), the system comprising:
an environment sensor (12) which is configured to capture sensor data (20) regarding an environment of the vehicle (10); and
a control unit (11) coupled to the environment sensor (12) and configured to
detect, based on the sensor data (20), a retroreflective component (42) which is attached to an object (44);
determine, based on the sensor data (20), a reflectometer type of the detected retroreflective component (42) from a plurality of pre-determined retroreflector types; wherein the plurality of pre-determined retroreflector types is associated with a corresponding plurality of reference data sets comprising information regarding objects (43, 44); and
determine information regarding the object (44) to which the detected retroreflective component (42) is attached, based on the reference data set which is associated with the determined reflectometer type of the detected retroreflective component (42).

2. The system of claim 1, wherein
different reference data sets from the plurality of reference data sets are indicative of different types of objects (43, 44);
the different types of objects (43, 44) comprise one or more different types of road users, a car, a truck, a bus, a pedestrian, a bicyclist, a motorcyclist, a building, and/or one or more different types of road infrastructure, a road barrier, a marker post and/or a traffic sign; and
the control unit (11) is configured to determine the type of the object (44) to which the detected retroreflective component (42) is attached, based on the reference data set which is associated with the determined reflectometer type of the detected retroreflective component (42).

3. The system of any previous claims, wherein different retroreflective components (41, 42) having different retroreflector types from the plurality of pre-determined retroreflector types differ at least with regards to one or more of the following properties
a number of retroreflective elements (51, 52) comprised within the retroreflective component (41, 42);
a spatial arrangement of two or more retroreflective elements (51, 52) comprised within the retroreflective component (41, 42);
a distance (D) between at least two retroreflective elements (51, 52) comprised within the retroreflective component (41, 42);
a location of an object (43, 44), at which the retroreflective component (41, 42) is attached to the object (43, 44);
a size of a retroreflective element (51, 52) of the retroreflective component (41, 42);
a shape of a retroreflective element (51, 52) of the retroreflective component (41, 42); and/or
a reflection property of a retroreflective element (51, 52) of the retroreflective component (41, 42).

4. The system of claim 3, wherein the control unit (11) is configured to
determine, based on the sensor data (20), measured values of one or more properties of the detected retroreflective component (42); and
determine the reflectometer type of the detected retroreflective component (42) based on the one or more measured values.

5. The system of claim 4, wherein
the plurality of reference data sets for the plurality of pre-determined retroreflector types comprises a corresponding plurality of lists of reference values for one or more properties of retroreflective components (41, 42) of the respective retroreflector type; and
the control unit (11) is configured to compare the one or more measured values with the plurality of lists of reference values for the corresponding plurality of pre-determined retroreflector types, in order to determine the reflectometer type of the detected retroreflective component (42).

6. The system of any of claims 5, wherein
the list of reference values of the reflectometer type of the detected retroreflective component (42) is indicative of at least one reference value for a size related property of the detected retroreflective component (42);
the control unit (11) is configured to determine, based on the sensor data (20), a measured value for the size related property of the detected retroreflective component (42); and
the control unit (11) is configured to determine the information regarding the object (44) to which the detected retroreflective component (42) is attached, based on the reference value and based on the measured value for the size related property.

7. The system of claim 6, wherein the size related property comprises
the size of a retroreflective element (51, 52) of the detected retroreflective component (42); and/or
the distance (D) between at least two retroreflective elements (51, 52) comprised within the detected retroreflective component (42).

8. The system of any of claims 6 to 7, wherein the control unit (11) is configured to
determine distance information regarding a distance (X) of the detected object (44) from the environment sensor (12) based on the reference value and based on the measured value for the size related property; and/or
determine size information regarding a size of the detected object (44) based on the reference value and based on the measured value for the size related property.

9. The system of any of claims 6 to 8, wherein the control unit (11) is configured to determine the information regarding the object (44) to which the detected retroreflective component (42) is attached, based on one or more sensor parameters of the environment sensor (12).

10. The system of any of the previous claims, wherein the control unit (11) is configured to detect the retroreflective component (42), determine the reflectometer type of the detected retroreflective component (42) and/or determine the information regarding the object (44) to which the detected retroreflective component (42) is attached, using one or more machine-learned object detection units (16).

11. The system of claim 10, wherein
the one or more machine-learned object detection units (16) each comprise a neural network (30); and/or
the one or more machine-learned object detection units (16) each comprise a convolutional neural network (30); and/or
the one or more machine-learned object detection units (16) have been trained using training data comprising a plurality of training data sets; and/or
the one or more machine-learned object detection units (16) have been trained for the plurality of different retroreflector types.

12. The system of any previous claims, wherein.
the detected retroreflective component (42) comprises a plurality of retroreflective elements (51, 52) which form a machine-readable code that is indicative of encoded information; and
the control unit (11) is configured to extract the encoded information from the machine-readable code.

13. The system of any previous claims, wherein
the vehicle (10) comprises a first and a second environment sensor (12); and the control unit (11) is configured to
determine the information regarding the object (44) based on the sensor data (20) captured by the first environment sensor (12); and
calibrate the second environment sensor (12) using the determined information regarding the object (44).

14. The system of any previous claims, wherein
the environment sensor (12) is configured to sense data regarding electromagnetic and/or acoustic waves within the environment of the vehicle (10); and
a retroreflective component (41, 42) is configured to reflect electromagnetic and/or acoustic waves with a reflectance greater than 50% and/or to reflect electromagnetic and/or acoustic waves into a direction of the environment sensor (12).

15. A method (60) for determining information regarding an object (44) within an environment of a vehicle (10); the method (60) comprising,
capturing (61) sensor data (20) regarding the environment of the vehicle (10);
detecting (62), based on the sensor data (20), a retroreflective component (42) which is attached to an object (44) within the environment of the vehicle (10);
determining (63), based on the sensor data (20), a reflectometer type of the detected retroreflective component (42) from a plurality of pre-determined retroreflector types; wherein the plurality of pre-determined retroreflector types is associated with a corresponding plurality of reference data sets comprising information regarding objects (43, 44); and
determining (64) information regarding the object (44) to which the detected retroreflective component (42) is attached, based on the reference data set which is associated with the determined reflectometer type of the detected retroreflective component (42).
